# EUROPÄISCHE PATENTSCHRIFT

(11) **EP 0 638 591 B1**
(45) Veröffentlichungstag und Bekanntmachung des Hinweises auf die Patenterteilung: **28.01.1998**
(21) Anmeldenummer: 94112082.6
(22) Anmeldetag: 03.08.1994
(51) Int. Cl.: C08F 2/02, C08F 220/32, C08F 220/04, C09D 133/14, C09D 133/02

(54) **Hydroxylgruppen enthaltende Copolymerisate, ihre Herstellung und ihre Verwendung in festkörperreichen Beschichtungsmitteln**
Copolymers containing hydroxyl groups, their preparation and their use in high solids coatings
Copolymères contenants de groupes hydroxyl, leur préparation et leur usage dans des revêtements à haute teneur en solides

(30) Priorität: 09.08.1993 DE 4326656
(43) Veröffentlichungstag der Anmeldung: 15.02.1995
(73) Patentinhaber: HOECHST AKTIENGESELLSCHAFT, 65926 Frankfurt am Main (DE)
(72) Erfinder: Epple, Ulrich, Dr., D-65205 Wiesbaden (DE); Kubillus, Uwe, Dr., D-65195 Wiesbaden (DE); Schmidt, Holger, Dr., D-65195 Wiesbaden (DE)

(56) Entgegenhaltungen:
- EP-A- 0 027 931
- EP-A- 0 320 719
- WO-A-90/03991

## Beschreibung

Der Vorteil von festkörperreichen ("high solid") Beschichtungsmitteln ist in der Verringerung der Emission organischer Verbindungen bei Applikation eines Lackes zu sehen. Um diese festkörperreichen Lackformulierungen zu erhalten, müssen z.B. entsprechende Acrylatharze mit niedrigen Viskositäten, d.h. geringen Molmassen eingesetzt werden.

Es ist wohl bekannt, daß zur Herstellung niedrigviskoser Polymerisate die radikalische Lösemittelpolymerisation eingesetzt werden kann (EP 408 858, EP 398 387, US 4,145,513, WO 92/18255). Der Nachteil dieser Verfahren ist, daß die Eigenschaften der Polymerisate durch den Einsatz beträchtlicher Mengen Polymerisationsinitiatoren und Polymerisationsregler sowie deren Folgeprodukte, die teilweise nicht in die Polymerkette eingebaut werden, beeinträchtigt werden. Insbesondere können die verwendeten Polymerisationsregler, wie z.B. Thiole, übel riechen oder sogar giftig sein. Die Polymerisate, die mit Hilfe der radikalischen Lösemittelpolymerisation unter hohem Druck bzw. bei hoher Temperatur in hochsiedenden Lösemitteln erhalten werden, besitzen diese Nachteile nicht, weisen aber durch die sehr geringen Molmassen bedingt meist zu niedrige Glasstufen auf, die den Einsatz als Bindemittel zur Beschichtung nicht erlauben. In den Beschichtungen zeigt sich dies dadurch, daß diese Materialien beliebig lange Staub- und Klebfreitrocknungszeiten besitzen können. Zusätzlich besitzen manche Systeme keine ausreichende Verarbeitungszeit für die kommerzielle Anwendung.

Bekannt ist auch (EP 0 027 931, EP 0 056 971) eine Polymerisation in Substanz, bei der eine Komponente wie beispielsweise ein Glycidylester oder ein Maleinat zu Beginn einer Polymerisation vorgelegt wird und somit als Lösemittel wirken kann. Dieser Ester bzw. dieses Monomer wird im weiteren Verlauf bei Zugabe von (im Fall des Maleinats weiteren) Monomeren während der Polymerisation vollständig in das Copolymerisat eingebaut. Aus diesen Copolymerisaten lassen sich Bindemittel für "high solid"-Lacke herstellen.

Der große Vorteil solch einer Polymerisationsart im Vergleich zu einer reinen Massepolymerisation liegt in der guten Abführung der Reaktionswärme sowie in der freien Wahl der Lösemittel zur Verdünnung nach Abschluß der Reaktion. Die richtige Wahl der Reaktionsparameter, insbesondere der Reaktionstemperatur, führt dann zu Produkten mit geringen Viskositäten und hohem Festkörper in einer fertigen Lackformulierung.

Durch die sukzessive Erhöhung der Reaktionstemperatur bei den Produkten der EP 0027931 und der DE-P-43 24 801.2 ergaben sich jedoch Produkte, die wohl geringste Molmassen, d.h. kleinste Viskositäten besaßen, die hierdurch jedoch auch Glasübergangstemperaturen unterhalb Raumtemperatur (20 °C) aufwiesen und hiermit für die Verwendung als Beschichtungsmittel zu lange Trocknungszeiten besaßen.

Gerade bei geringsten Molmassen ist die Abhängigkeit der Glasübergangstemperatur von der Molmasse drastisch. Alle Versuche, die Glasübergangstemperaturen dieser niedermolekularen Copolymerisate nach der Gordon-Taylor-Gleichung (M. Gordon, J.S. Taylor, J. Appl. Chem. USSR, 2, 493, 1952) oder der Fox-Gleichung (T.G. Fox, Proc. Amer. Phys. Soc. 1, 123, 1956) vorauszusagen, schlugen fehl. Dies liegt nicht zuletzt daran, daß diese Additivitätsgleichungen für die Glasübergangstemperatur nur die Zusammensetzung der Copolymeren berücksichtigen, nicht aber die unterschiedliche Abhängigkeit der Glasübergangstemperatur von der Molmasse der entsprechenden Homopolymeren und Copolymeren in diesem Bereich.

Es stellte sich daher die Aufgabe, ein neues hydroxylgruppenhaltiges Copolymerisat möglichst nach dem vorteilhaften Substanzpolymerisationsverfahren herzustellen, das trotz geringsten Molmassen, d.h. kleinsten Viskositäten, eine ausreichend hohe Glasübergangstemperatur aufweist.

Überraschend wurde nun gefunden, daß durch den Einsatz besonderer sterisch gehinderter Monomere die gewünschten niedrigstviskosen Copolymerisate erhalten werden konnten, die noch Glasübergangstemperaturen oberhalb Raumtemperatur (20 °C) besaßen. Diese neuen Copolymerisate weisen geringste Molmassen auf und sind bestens geeignet als Bestandteile von Beschichtungsmitteln.

Die Erfindung betrifft daher niedrigviskose Copolymerisate mit besonders niedriger Lösungsviskosität, herstellbar durch eine Polymerisation in Substanz, bei der eine Komponente (A) zu Beginn der Polymerisation vorgelegt wird und im weiteren Verlauf mindestens zwei olefinisch ungesättigte copolymerisierbare Monomere (B) zugefügt werden, wobei die Komponente (A) in einem Anteil von 5 bis 50 Gew.-% und die Komponente (B) in einem Anteil von 95 bis 50 Gew.-% eingesetzt wird, die Komponente (A) ein oder mehrere Glycidylester von aliphatischen gesättigten Monocarbonsäuren mit einem tertiären oder quaternären α-C-Atom ist, und die olefinisch ungesättigten Monomeren gemäß (B) enthalten
B1) ein oder mehrere olefinisch ungesättigte Monomere mit mindestens einer -COOH-Gruppe,
B2) einen oder mehrere Ester der Acryl- oder Methacrylsäure mit cyclischen aliphatischen Alkoholen mit 5 bis 30 Kohlenstoffatomen,
sowie gegebenenfalls eine oder mehrere der Komponenten B3 bis B5, nämlich
B3) einen oder mehrere Hydroxyalkylester von α,β-ungesättigten Carbonsäuren,
B4) einen oder mehrere Ester einer α,β-ungesättigten Carbonsäure mit einem einwertigen aliphatischen Alkohol mit 1 bis 20 C-Atomen und
B5) eine oder mehrere olefinisch ungesättigte Verbindungen, die nicht unter B1, B2, B3 oder B4 fallen,
dadurch gekennzeichnet, daß die Copolymerisate eine zahlenmittlere molare Masse Mₙ unter 5000 g/mol und eine Glasübergangstemperatur oberhalb Raumtemperatur (20°C) bei einer Aufheizrate von 10 K/Min, besitzen.

Im besonderen sind die erfindungsgemäßen Copolymerisate ausgezeichnet durch ihren Gehalt an Hydroxylgruppen und ihre extrem niedrige Viskosität. Die Erfindung betrifft weiter die Herstellung dieser Copolymerisate und ihre Verwendung als Bestandteil von Beschichtungsmitteln.

Die Erfindung betrifft insbesondere Acrylat-Copolymerisate mit einer OH-Zahl von 40 bis 250 mg KOH/g, einer niedrigen Lösungsviskosität von 10 bis 2000 mPa s (50 %ige Lösung; 23 °C (DIN 53018)) und einer mittleren Molmasse (Zahlenmittel <Mₙ>) von kleiner als 4000 g/mol.

Als Komponente A) werden bevorzugt Glycidylester von α-Alkylalkanmonocarbonsäuren und/oder α,α-Dialkylalkanmonocarbonsäuren einzeln oder im Gemisch verwendet.

Die Verbindungen gemäß A) sind beispielsweise ausgewählt aus dem Glycidylester der 2,2-Dimethylpropionsäure und/oder der Neosäuren, wie Neodecan(C10)säure oder Neononan(C9)säure oder 10,10-Dimethylundecansäure. Die Alkylreste können hierbei eine unterschiedliche Anzahl an C-Atomen besitzen.

Im allgemeinen liegt die Gesamtzahl an C-Atomen der Ausgangsmonocarbonsäuren für den Glycidylester zwischen 4 und 30, insbesondere zwischen 5 und 20.

Die Verbindungen gemäß B1 sind beispielsweise ausgewählt aus den sauren Acrylmonomeren wie Acryl- und Methacrylsäure, Malein-, Fumar- und Itaconsäure sowie deren Halbestern, und Crotonsäure, Isocrotonsäure und Vinylessigsäure. Sie müssen in einer ausreichenden Menge angeboten werden, damit die Umsetzung mit der Komponente A vollständig abläuft und sich im Produkt eine Säurezahl von mindestens 2 mg KOH/g ergibt.

Auch in den weiter unten genannten Komponenten B3 bis B5 schließt der Begriff "α,β-ungesättigte Carbonsäuren" auch die Dicarbonsäuren wie beispielsweise Maleinsäure, Fumarsäure und Itaconsäure sowie deren Halbester ein.

Die Verbindungen gemäß B2 sind Ester der α,β-ungesättigten Carbonsäuren Acrylsäure und Methacrylsäure mit cyclischen aliphatischen Alkoholen mit 5 bis 30 C-Atomen, insbesondere 6 bis 20 C-Atomen.

Geeignete Alkohole sind u.a. Cyclohexanol, 4-tert.Butylcyclohexanol, 3,3,5-Trimethylcyclohexanol, Isoborneol, (8/9)-Hydroxy-tricyclo[5.2.1.0^{2.6}]dec-3-en (Dihydrodicyclopentadienylalkohol), 8-Hydroxy-tricyclo[5.2.1.0^{2.6}]decan, 8-Hydroxymethyltricyclo[5.2.1.0^{2.1}]decan und Citronellol.

Die Hydroxyalkylester gemäß B3 sind Halbester von α,β-ungesättigten Monocarbonsäuren mit aliphatischen Diolen mit 2 bis 30, insbesondere 2 bis 20 C-Atomen. Halbester mit einer primären Hydroxylgruppe sind beispielsweise Hydroxyethylacrylat, Hydroxypropylacrylat, Hydroxybutylacrylat, Hydroxyamylacrylat, Neopentylglykolmonoacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt. Selbstverständlich können jeweils auch die entsprechenden Ester anderer α,β-ungesättigter Carbonsäuren wie z.B. der Crotonsäure, der Isocrotonsäure und der Vinylessigsäure eingesetzt werden. Gleichfalls geeignet sind auch Umsetzungsprodukte aus einem Mol Hydroxyethylacrylat und/oder Hydroxyethylmethacrylat und durchschnittlich zwei Mol ε-Caprolacton. Andere geeignete hydroxygruppenhaltige Ester leiten sich ab von den α,β-ungesättigten Carbonsäuren und den oligomeren Alkylenglykolen wie Oligo-ethylen- und -propylenglykol. Weitere geeignete Verbindungen sind Halbester von α,β-ungesättigten Monocarbonsäuren mit cycloaliphatischen Diolen wie 1,4-Cyclohexandimethanol, 3(4),8(9)-Bis-(hydroxymethyl)-tricydo[5.2.1.0^{2.6}]decan oder Dihydroxyaromaten wie Brenzkatechin und Hydrochinon.

Die Verbindungen gemäß B4 sind beispielsweise ausgewählt aus Estern α,β-ungesättigter Monocarbonsäuren mit aliphatischen einwertigen unverzweigten Alkoholen mit 1 bis 20 C-Atomen wie Methyl-, Ethyl-, Butyl-, Hexyl-, Lauryl- und Stearyl- sowie Isopropyl- und 2-Amylacrylat oder -methacrylat. Geeignet sind auch Ester dieser Alkohole mit z.B. Crotonsäure, Isocrotonsäure oder Vinylessigsäure. Besonders bevorzugt sind Methyl- und Ethylacrylat sowie deren Methacrylate.

Die Verbindungen gemäß B5 sind beispielsweise ausgewählt aus der Gruppe der Acryl- oder Methacrylester mit halogenierten Alkoholen wie z.B. Trifluorethyl-, Pentafluor-n-propyl- und Hexachlorbicycloheptenyl-acrylat, der Ester halogenierter Acrylsäuren wie Methyl-2-fluoracrylat oder Dibromphenyl-2-fluoracrylat, der Vinylester wie Vinylacetat, der halogenierten Vinylverbindungen wie Vinylchlorid, Vinylidenchlorid und Vinylidenfluorid und der halogenierten vinylaromatischen Verbindungen wie Chlorstyrol. Sämtliche Verbindungen, die unter B1 bis B4 genannt sind und zusätzlich halogensubstituiert sind, fallen ebenfalls in diese Gruppe.

Im Ausgangsmonomergemisch besteht die Komponente B bevorzugt aus einem Gemisch von
B1) 1 bis 20, vorzugsweise 3 bis 15 Gew.% einer α,β-ungesättigten Monocarbonsäure, vorzugsweise Acryl- oder Methacrylsäure oder deren Mischungen,
B2) 1 bis 85, vorzugsweise 3 bis 80 Gew.% eines Esters der Acryl- oder Methacrylsäure mit einem cyclischen aliphatischen Alkohol mit 5 bis 30 Kohlenstoffatomen oder Mischungen von mehreren solcher Monomeren,
B3) 0 bis 45, vorzugsweise 10 bis 45 Gew.% eines Hydroxyalkylesters der Acrylsäure oder Methacrylsäure oder Mischungen mehrerer solcher Ester,
B4) 0 bis 60, vorzugsweise 0 bis 55 Gew.% eines Esters der Acryl- oder Methacrylsäure mit einem einwertigen aliphatischen Alkohol oder Mischungen mehrerer solcher Ester,
B5) 0 bis 60, vorzugsweise 0 bis 55 Gew.% mindestens einer olefinisch ungesättigten Verbindung, wie oben beschrieben,
wobei die Summe der Komponenten B stets 100 und wobei die Summe der Ester bevorzugt nicht mehr als 95 Gew.% beträgt.
Insbesondere geeignete Monomere sind
B1) Acrylsäure und Methacrylsäure,
B2) Cyclohexyl-, 4-tert.Butylcyclohexyl-, 3,3,5-Trimethylcyclohexyl-, Isobornylund Dihydrodicyclopentadienylester der Acryl- und der Methacrylsäure,
B3) Hydroxyethyl-, Hydroxypropyl- und Hydroxybutylester der Acryl- und der Methacrylsäure,
B4) Methyl-, Ethyl-, Butyl-, Pentyl-, Hexyl-, Lauryl- und Stearylester der Acryl- und Methacrylsäure,
B5) fluorierte und chlorierte Acrylester wie Trifluorethylacrylat, Pentafluorpropylmethacrylat und Methyl-2-fluoracrylat und fluorierte und chlorierte vinylaromatische Verbindungen wie 4-Chlor- oder 4-Fluorstyrol.

Während der Polymerisationsreaktion bildet sich aus den sauren Monomeren und dem vorgelegten Glycidylester ein Umsetzungsprodukt, das im erfindungsgemäßen Copolymerisat im allgemeinen in einem Anteil von 6 bis 60, vorzugsweise 10 bis 55 Gew.% vorliegt.

Für die erfindungsgemäßen Copolymerisate kommen die üblichen radikalbildenden Verbindungen als Polymerisationsinitiatoren einzeln oder im Gemisch in Frage. Solche sind z.B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid oder Di-t-amylperoxid und Alkylperester, wie t-Butylperoxy-2-ethylhexanoat oder t-Amylperoxy-2-ethylhexanoat. Der Anteil der Initiatoren kann z.B. 0,5 bis 5, vorzugsweise bis 4, insbesondere bis 3 Gew.%, bezogen auf das Gesamtgewicht der Ausgangskomponenten, betragen.

Die Polymerisation wird vorzugsweise in Substanz (am Polymerisationsende als "Massepolymerisation") vorgenommen. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittelanteil möglich, nämlich bis zu 20, vorzugsweise bis zu 10 und insbesondere bis zu 8 Gew.%, bezogen auf die Ausgangskomponenten. Jedoch ist das Arbeiten ohne Lösemittel vorzuziehen.

Die Polymerisation ist dadurch gekennzeichnet, daß die Komponente A), der Glycidylester, vorgelegt und üblicherweise bei 100 bis 210 °C mit der Komponente B) und mindestens einem radikalischen Initiator in einer Substanzpolymerisation so lange umgesetzt wird, bis ein Umsetzungsgrad von mindestens 95, vorzugsweise mindestens 96 % erreicht ist.

Die hergestellten hydroxylgruppenhaltigen Copolymerisate können in einer weiteren Stufe noch modifiziert werden, z.B. durch Umsetzen mit Isocyanat-Verbindungen, die pro Molekül durchschnittlich 0,8 bis 1,5 freie NCO-Gruppen und mindestens eine tertiäre Aminogruppe enthalten. Dann muß das bei der Polymerisation, also der Herstellung der Polymeren, eingesetzte Lösemittel selbstverständlich gegenüber diesen Isocyanat-Verbindungen inert sein.

Diese Isocyanat-Verbindungen schließen beispielsweise auch alle niedermolekularen Harnstoffderivate ein, die in der Lackindustrie zu "sag controlled" Acrylatharzen führen.

Die erfindungsgemäßen Acrylatharze zeichnen sich aus durch ihre OH-Gruppen, die im allgemeinen zu einer OH-Zahl von 40 bis 250, bevorzugt von 70 bis 200 und insbesondere von 80 bis 180 mg KOH/g führen, sowie durch eine Glasübergangstemperatur von über 20 °C (gemessen bei einer Aufheizrate von 10 K/min). Weiterhin besitzen die erfindungsgemäßen Polymerisate eine besonders niedrige Lösungsviskosität. Im allgemeinen liegt sie im Bereich von 10 bis 2000, vorzugsweise 15 bis 1000 und insbesondere 20 bis 500 mPa s [50 %ige Lösung; 23 °C (DIN 53018)]. Die Polymerisate besitzen typischerweise mittlere Molmassen (Zahlenmittel) von kleiner 5000, bevorzugt von 300 bis 4500 und insbesondere von 500 bis 4000 g/mol.

Die erfindungsgemäßen Copolymerisate eignen sich besonders gut für lacktechnische Anwendungen in 2-Komponenten-Systemen, insbesondere für sogenannte "high-solid" Systeme, also für lösemittelhaltige Mischungen mit hohem Festkörpergehalt.

Geeignete Lösemittel für die erfindungsgemäß erhaltenen Produkte sind z.B. aliphatische, cycloaliphatische und/oder aromatische Kohlenwasserstoffe, wie Alkylbenzole, z.B. Xylol, Toluol; Ester, wie Ethylacetat, Butylacetat, Acetate mit längeren Alkoholresten, Butylpropionat, Pentylpropionat, Ethylenglykolmonoethyletheracetat, das entsprechende Methyletheracetat; Ether, wie Ethylenglykolacetatmonoethyl-, methyl- oder butylether; Glykole; Alkohole; Ketone wie Methylamylketon, Methylisobutylketon; Lactone oder dergleichen oder Gemische derartiger Lösemittel.

Gegenstand der vorliegenden Erfindung sind weiterhin Beschichtungsmittel, die die erfindungsgemäßen, hydroxylgruppenhaltigen Copolymerisate als Bindemittelkomponente enthalten. Die Copolymerisate können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate sowie Anhydridgruppen enthaltende Verbindungen einzeln oder in Kombination. Der Vernetzer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt.

Als Härterkomponente geeignete Aminoplastharze sind bevorzugt Harnstoff-, Melamin- und/oder Benzoguanaminharze. Es handelt sich hierbei um veretherte Harnstoff-, Melamin- bzw. Benzoguanamin-Formaldehyd-Kondensationsprodukte. Geeignete Mischungsverhältnisse liegen im Bereich von 50 : 50 bis 90 : 10 Copolymerisat / Aminoharzvernetzer auf Festharz bezogen. Auch geeignete Phenolharze und ihre Derivate können als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 80 bis 200 °C, z.B. in 10 bis 30 Minuten vorgenommen werden.

Für die Härtung der erfindungsgemäßen Produkte, besonders bei moderaten Temperaturen bzw. bei Raumtemperatur, unter Vernetzung eignen sich Polyisocyanate. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-Isocyanato-3,3,5-trimethyl-5-isocyanatomethyl-cyclohexan (IPDI), 2,4'- und/oder 4,4'-Diisocyanato-dicyclohexylmethan, 2,4'- und/oder 4,4'-Di-isocyanato-diphenylmethan oder Gemische dieser Isomeren mit ihren höheren Homologen, wie sie in an sich bekannter Weise durch Phosgenierung von Anilin/Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP 0 470 461 beschrieben werden. Zu den besonders bevorzugten modifizierten Polyisocyanaten gehören das N,N',N"-Tris-(-6-isocyanatohexyl)-biuret und seine Gemische mit seinen höheren Homologen, sowie das N,N',N"-Tris-(-6-isocyanatohexyl)-isocyanurat bzw. dessen Gemische mit seinen höheren, mehr als einen Isocyanuratring aufweisenden Homologen.

Die Vernetzung kann durch Zusatz von organischen Metallverbindung, wie Zinnverbindungen und gegebenenfalls tertiären Aminen, vorzugsweise Diethylethanolamin, katalysiert werden. Entsprechende Zinnverbindungen sind beispielsweise Dibutylzinndilaurat, Dibutylzinndiacetat und Dibutyloxozinn.

Für eine Härtung bei erhöhter Temperatur kommen zusätzlich verkappte Polyisocyanate, Polycarbonsäuren bzw. deren Anhydride in Frage.

Die erfindungsgemäßen Copolymerisate eignen sich besonders gut zur Herstellung von festkörperreichen, lösemittelhaltigen Klarlacken. Außerdem eignen sie sich gut zur Herstellung von Pulverlacken in Verbindung mit Polycarbonsäureanhydriden. Sie lassen sich zur Umsetzung mit Polycarbonsäureanhydriden und zur Weiterverwendung der so erhaltenen Produkte als Härter für verschiedene Kunstharze, insbesondere Epoxyharze, einsetzen. Von besonderem Interesse ist die Verwendung der erfindungsgemäß hergestellten Produkte zusammen mit speziellen Polycarbonsäureteilestern oder Derivaten von Polycarbonsäuren bzw. deren Anhydriden oder Esteranhydriden.

Bevorzugte Polycarbonsäurederivate sind z.B. Polyanhydride, die sich von mindestens vierwertigen Carbonsäuren herleiten und mit denen die erfindungsgemäß hergestellten Produkte umgesetzt werden können. Diese Systeme sind wegen ihrer hohen Reaktivität insbesondere für eine Kalthärtung interessant.

In Beschichtungsmitteln, die mit den erfindungsgemäßen Copolymerisaten hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate, viskositätskontrollierende Zusätze, Mattierungsmittel, UV-Absorber und Lichtschutzmittel, Antioxidantien und/oder Peroxidzersetzer, Entschäumer und/oder Netzmittel, aktive Verdünner und dergleichen.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösemitteln (z.B. CO₂) in eine applikationsfertige Form gebracht werden. Autoreparaturlacke mit ausgezeichneten Eigenschaften lassen sich mit Bindemitteln erhalten, die mit den erfindungsgemäßen Copolymerisaten hergestellt werden. Diese Bindemittel können sowohl zur Herstellung von Zwischenschichten als auch von pigmentierten oder unpigmentierten Decklacken eingesetzt werden. Ausdrücklich soll auf die vorzügliche Eignung dieser Bindemittelkombinationen in Zweikomponenten-Autoreparatur- und Industrielacken hingewiesen werden.

Hierzu werden die Lacke im allgemeinen innerhalb des Temperaturbereichs von -20 bis +100°C, vorzugsweise von -10 bis + 80 °C (moderate Temperaturen) ausgehärtet.

Die Erfindung wird in den folgenden Beispielen näher erläutert. In den Ausführungsbeispielen beziehen sich alle Prozentangaben auf das Gewicht, falls nicht ausdrücklich etwas anderes festgelegt wird.

### Beispiele:

### I. Herstellung der Copolymerisate

In einem mit Rührwerk, Inertgaseinleitung, Heiz- und Kühlsystem und Zugabeeinrichtung ausgestatteten Reaktor, wird der Glycidylester einer α,α-Dialkylalkanmonocarbonsäure [z.B. Glycidylester der Versatic 10 bzw. 5 Säure (Handelsname: Cardura® E 10 bzw. Cardura® E 5, Shell Chemicals)] (z.T. in Lösemittel oder Lösemittelgemischen) vorgelegt und unter Inertgas auf die gewünschte Temperatur aufgeheizt. Dann wird innerhalb 6 Stunden die Monomerenmischung (z.T. in Lösemittel oder Lösemittelgemischen) zusammen oder getrennt mit Initiator oder Initiatormischungen (z.T. in Lösemittel oder Lösemittelgemischen) gleichmäßig zudosiert. Anschließend wird noch 2 Stunden nachpolymerisiert, bis ein Umsatz von mindestens 95 % erreicht ist.

Falls der Festkörpergehalt nach der Polymerisation unter 97,0 % liegt, wird der Ansatz entweder vor oder während der Nachpolymerisation mit 1/10 der Ausgangsinitiatormenge (ohne/mit Lösemittel) nachgeimpft oder die Restmonomeren (inkl. Initiatorfragmente/Lösemittel) werden in einer Vakuumdestillation abgetrennt.

Die Copolymerisate werden in geeigneten Lösemitteln oder Lösemittelgemischen angelöst.

Alle Copolymerisate werden durch eine geeignete Filtereinrichtung filtriert. Es werden folgende Copolymerisate hergestellt. Die genauen Ansätze in Gewichtsteilen, Reaktionsbedingungen und Kennzahlen der Produkte sind aus den nachstehenden Tabellen zu entnehmen.

**Tabelle 1:**

| Herstellung und Eigenschaften der Copolymerisate | | | |
|---|---|---|---|
| **Ansatz** | **Copolymer 1** | **Copolymer 2** | **Copolymer 3** |
| Glycidylester (Cardura® E10) | 20,90 | 20,50 | 22,65 |
| Acrylsäure | 6,73 | 6,60 | 3,63 |
| Methacrylsäure | - | - | 4,37 |
| Hydroxyethylmethacrylat | 20,62 | 22,50 | 20,35 |
| Isobornylacrylat | - | 28,65 | 14,30 |
| Isobornylmethacrylat | 25,05 | - | - |
| Methylmethacrylat | 5,64 | 3,75 | 11,46 |
| Styrol | 21,06 | 18,00 | 23,24 |
| Initiator | A | B | B |
| | 1,80 | 1,51 | 1,50 |
| Polymerisationstemperatur (°C) | 170 | 185 | 175 |
| FK (%) nach Polymerisation | 97,5 | 98,5 | 97,8 |
| FK (%) Lff. (in Butylacetat) | 75,1 | 75,7 | 74,7 |
| Säurezahl (mg KOH/g FH) | 8,6 | 11,5 | 10,7 |
| Hydroxylzahl (mg KOH/g FH) | 140 | 147 | 143 |
| Viskosität (mPa s), 23°C (Lff.) | 9800 | 6170 | 11040 |
| Viskosität (mPa s), 23°C (50%ig in BuAc/Xylol 1:1) | 51 | 48 | 69 |
| GPC (PS-Eichung) | | | |
| <Mw> (g/moil | 3310 | 4650 | 4640 |
| <Mn> (g/mol) | 1580 | 1960 | 1930 |
| U = <Mw> / <Mn> | 2,1 | 2,4 | 2,4 |
| Hazen-Farbzahl (DIN 53995) | 50 | 42 | 61 |
| Tg (DSC-Messung, °C) | 25 26 27 | 26 | 27 |
| Aussehen | transparent | transparent | transparent |

FK: Festkörper, FH: Festharz
Lff.: Lieferform
Tg Glasübergangstemperatur des Festharzes (Bindemittels)
Messung: DSC-7 der Firma Perkin Elmer, Überlingen, Heizrate 10 K/Min.
Initiatoren:
A : Di-tert.-amylperoxid: (Interox® DTAP) (Peroxid Chemie)
B : Di-tert.-butylperoxid: (Trigonox® B) (AKZO)
GPC: <Mw>, <Mn> Millipore® Waters Chromatographie System 860
   Pumpe: Model 590 Rl-Detektor: Model 410
   Säulensatz: Waters Ultrastyragel 2 x LINEAR + 1 x 500 Å (Ångström)
Lösungsmittel: Tetrahydrofuran bei 40 °C
Durchfluß: 1 ml/min., Konzentration: 1 %ig auf Festkörper
Kalibrierung: Polystyrol (Fa. PSS, Mainz)

Bestimmung der Kenndaten: Säurezahl, Hydroxylzahl und Viskosität (Normen siehe "Analytische Bestimmungsmethoden", Broschüre: Kunstharze Hoechst, Ausgabe 1982; Fa. Hoechst AG, Frankfurt/Main)

### Hazenfarbzahl nach DIN 53995 (LTM1, Fa. Dr. Lange GmbH, Berlin)

Die hergestellten Copolymere 1 bis 3 weisen geringste mittlere Molmassen (Zahlenmittel) und niedrigste Lösungsviskositäten (Ubbelohde: 50 %ig in BuAc/Xylol 1:1, 23 °C) auf.

Die Glasübergangstemperaturen sind oberhalb Raumtemperatur (20 °C).

**Tabelle 2:**

| Herstellung und Eigenschaften der Copolymerisate | | | | |
|---|---|---|---|---|
| **Ansatz** | **Copolymer 4** | **Copolymer 5** | **Copolymer 6** | **Copolymer 7** |
| Glycidylester (Cardura® E10) | 23,25 | 22,68 | 21,42 | 24,09 |
| Acrylsäure | 7,48 | 7,30 | 6,90 | 7,76 |
| Hydroxyethylmethacrylat | 22,93 | 22,37 | 21,13 | 23,77 |
| tert.-Butylmethacrylat | 17,83 | - | - | - |
| Cyclohexylmethacrylat | - | 19,84 | - | - |
| 4-tert.-Butylcyclohexylacrylat | - | - | 24,28 | - |
| 2-Ethylhexylacrylat | - | - | - | 14,83 |
| Methylmethacrylat | 6,27 | 6,12 | 5,78 | 6,50 |
| Styrol | 22,24 | 21,69 | 20,49 | 23,05 |
| Initiator | A | A | A | A |
| | 1,98 | 1,93 | 1,83 | 2,06 |
| Polymerisationstemperatur (°C) | 175 | 175 | 175 | 175 |
| FK (%) nach Polymerisation | 96,9 | 96,3 | 97,2 | 97,1 |
| nach Destillation | 98,1 | 97,3 | - | - |
| FK (%) Lff. (in Butylacetat) | 74,8 | 74,9 | 75,4 | 73,7 |
| Säurezahl (mg KOH/g FH) | 30,4 | 9,1 | 9,3 | 9,6 |
| Hydroxylzahl (mg KOH/g FH) | 165 | 147 | 141 | 154 |
| Viskosität (mPa s), 23°C (Lff.) | 14450 | 9480 | 10940 | 6111 |
| Viskosität (mPa s), 23°C (50%ig in BuAc) | 71 | 47 | 56 | 43 |
| GPC (PS-Eichung) | | | | |
| <Mw> (g/mol) | 6050 | 4030 | 4220 | 3540 |
| <Mn> (g/mol) | 2520 | 1830 | 2010 | 1610 |
| U = <Mw> / <Mn> | 2,4 | 2,2 | 2,1 | 2,2 |
| Hazen-Farbzahl (DIN 53995) | 43 | 38 | 45 | 31 |
| Tg (DSC-Messung, °C) | 24 | 22 | 24 | 21 |
| Aussehen | transparent | transparent | transparent | transparent |

FK: Festkörper, FH: Festharz
Lff.: Lieferform
Tg Glasübergangstemperatur des Festharzes (Bindemittels)
Messung: DSC-7 der Firma Perkin Elmer, Überlingen, Heizrate 10 K/Min.
Initiatoren:
A : Di-tert.-amylperoxid: (Interox® DTAP) (Peroxid Chemie)
B : Di-tert.-butylperoxid: (Trigonox® B) (AKZO)
GPC: < Mw > , < Mn > Millipore® Waters Chromatographie System 860
   Pumpe: Model 590 RI-Detektor: Model 410
   Säulensatz: Waters Utrastyragel 2 x LINEAR + 1 x 500 Å (Ängström)
Lösungsmittel: Tetrahydrofuran bei 40 °C
Durchfluß: 1 ml/min., Konzentration: 1 %ig auf Festkörper
Kalibrierung: Polystyrol (Fa. PSS, Mainz)

Bestimmung der Kenndaten: Säurezahl, Hydroxylzahl und Visko'sität (Normen siehe "Analytische Bestimmungsmethoden", Broschüre: Kunstharze Hoechst, Ausgabe 1982; Fa. Hoechst AG, Frankfurt/Main)

### Hazenfarbzahl nach DIN 53995 (LTM1, Fa. Dr. Lange GmbH, Berlin)

Die hergestellten Copolymere 4 bis 7 weisen geringste mittlere Molmassen (Zahlenmittel) und niedrigste Lösungsviskositäten (Ubbelohde: 50 %ig in BuAc 23 °C) auf.

Die Glasübergangstemperaturen sind oberhalb Raumtemperatur (20 °C).

**Tabelle 3:**

| Herstellung und Eigenschaften der Copolymerisate | | |
|---|---|---|
| **Ansatz** | **Copolymer 8** | **Copolymer 9** |
| Glycidylester (Cardura® E10) | 11,39 | 11,43 |
| Acrylsäure | - | 1,83 |
| Methacrylsäure | 4,37 | 2,19 |
| Hydroxypropylmethacrylat | 30,57 | 30,68 |
| 4-tert.-Butylcyclohexylmethacrylat | 15,19 | 15,25 |
| Methylmethacrylat | 6,63 | 6,65 |
| Styrol | 31,85 | 31,97 |
| Initiator | B | B |
| | 1,50 | 1,50 |
| Polymerisationstemperatur (°C) | 185 | 185 |
| FK (%) nach Polymerisation | 96,4 | 97,8 |
| nach Destillation | 98,0 | - |
| FK (%) Lff. (in Butylacetat) | 75,3 | 75,5 |
| Säurezahl (mg KOH/g FH) | 6,1 | 6,6 |
| Hydroxylzahl (mg KOH/g FH) | 147 | 145 |
| Viskosität (mPa s), 23°C (Lff.) | 5440 | 8400 |
| Viskosität (mPa s), 23°C (50%ig in BuAc) | 31 | 34 |
| GPC (PS-Eichung) | | |
| <Mw> (g/mol) | 2900 | 3180 |
| <Mn> (g/mol) | 1340 | 1430 |
| U = <Mw> / <Mn> | 2,2 | 2,2 |
| Hazen-Farbzahl (DIN 53995) | 44 | 35 |
| Tg (DSC-Messung, °C) | 24 | 21 |
| Aussehen | transparent | transparent |

FK: Festkörper, FH: Festharz
Lff.: Lieferform
Tg Glasübergangstemperatur des Festharzes (Bindemittels)
Messung: DSC-7 der Firma Perkin Elmer, Überlingen, Heizrate 10 K/Min.
Initiatoren:
A : Di-tert.-amylperoxid: (Interox® DTAP) (Peroxid Chemie)
B : Di-tert.-butylperoxid: (Trigonox® B) (AKZO)
GPC: <Mw>, <Mn> Millipore® Waters Chromatographie System 860
   Pumpe: Model 590 Rl-Detektor: Model 410
   Säulensatz: Waters Utrastyragel 2 x LINEAR + 1 x 500 Å (Ångström)
Lösungsmittel: Tetrahydrofuran bei 40 °C
Durchfluß: 1 ml/min., Konzentration: 1 %ig auf Festkörper
Kalibrierung: Polystyrol (Fa. PSS, Mainz)

Bestimmung der Kenndaten: Säurezahl, Hydroxylzahl und Viskosität (Normen siehe "Analytische Bestimmungsmethoden", Broschüre: Kunstharze Hoechst, Ausgabe 1982; Fa. Hoechst AG, Frankfurt/Main)

### Hazenfarbzahl nach DIN 53995 (LTM1, Fa. Dr. Lange GmbH, Berlin)

Die hergestellten Copolymere 8 und 9 weisen geringste mittlere Molmassen (Zahlenmittel) und niedrigste Lösungsviskositäten (Ubbelohde: 50 %ig in BuAc 23 °C) auf.

Die Glasübergangstemperaturen sind oberhalb Raumtemperatur (20 °C).

### II.) Herstellung der Lacke

Zur Herstellung der erfindungsgemäßen härtbaren Beschichtungsmittel werden die Komponenten bestehend aus einem Copolymerisat oder einer Mischung mehrerer solcher oder anderer Copolymerisate mit den Hilfs- und Zusatzstoffen, Lösungsmitteln und Vernetzern im beschriebenen Mischungsverhältnis (Tabellen 4-6) gemischt und mit weiterem Verdünnungsmittel auf die Spritzviskosität von 20 bis 21 Sekunden mit dem Auslaufbecher (DIN 52 211,4 mm, 23 °C) eingestellt. Bei Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem Copolymerisat 1 oder einer Mischung mehrerer solcher oder anderer Copolymerisate oder einem geeigneten speziellen Anreibeharz in einem Dispergieraggregat geeigneter Bauweise eine Pigmentpaste erzeugt. Diese wird gemischt und unter Zufügung weiterer Verdünnungsmittel oder lacktypischer Zusätze komplettiert (Tabelle 7). Gegebenenfalls kann weiteres Bindemittel auf Basis der erfindungsgemäßen Copolymerisate oder ein Fremdharz, das mit den übrigen Komponenten des Lacksystems verträglich ist, zugemischt werden. Die Topfzeit und die Eigenschaften der resultierenden Filme hängen dabei von den Verfahrensbedingungen d.h. von der Art und Menge der Ausgangsstoffe, Dosierung des Katalysators, der Temperaturführung etc. ab. Obwohl die Härtung in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

### II. 1 Klarlacke

**Tabelle 4:**

| Herstellung der "high solid" Klarlacke | | | |
|---|---|---|---|
| | Copolymerisate | | |
| Ansatz | 1 | 2 | 3 |
| Aussehen | transparent | transparent | transparent |
| FK % | 75,1 | 75,7 | 74,7 |
| OH-Zahl/% OH | 140/4.2 | 147/4,4 | 143/4,3 |
| Visk. mPa s(50%) | 51 | 48 | 69 |
| Bindemittel | 82 | 82 | 82 |
| Tinuvin® 292 | 0,5 | 0,5 | 0,5 |
| Tinuvin® 1130 | 1,5 | 1,5 | 1,5 |
| Si Öl LO 50% 10%ig | 1 | 1 | 1 |
| Solvesso® 100 | 1,5 | 1,5 | 1,5 |
| Xylol | 2,5 | 2,5 | 2,5 |
| BuAc | 11 | 11 | 11 |
| Desmodur® N 3390 | 32,7 | 34,3 | 33,5 |
| Auslaufbecher | 21 | 21 | 21 |
| (DIN 53 211) | | | |
| (Sekunden) | | | |
| Lackbezeichnung | Lack 1 | Lack 2 | Lack 3 |
| Tinuvin® 292 "HALS" (Fa. Ciba Geigy, Basel) Tinuvin® 1130 UV-Absorber (Fa. Ciba Geigy, Basel) Si Öl LO 50% Verlaufsmittel Silikonöl (Fa. Wacker Chemie GmbH, Burghausen) Desmodur® N 3390 Isocyanurat-Gruppen aufweisendes Polyisocyanat (Fa. Bayer AG, Leverkusen) BuAc Butylacetat | | | |

**Tabelle 5:**

| Herstellung der "high solid" Klarlacke | | | | |
|---|---|---|---|---|
| | Copolymerisate | | | |
| Ansatz | 4 | 5 | 6 | 7 |
| Aussehen | transparent | transparent | transparent | transparent |
| FK % | 74,8 | 74,9 | 75,4 | 73,7 |
| OH-Zahl/% OH | 165/5,0 | 147/4,4 | 141/4,2 | 154/4,6 |
| Visk. mPa s(50%) | 71 | 47 | 56 | 43 |
| Bindemittel | 82 | 82 | 82 | 82 |
| Tinuvin® 292 | 0,5 | 0,5 | 0,5 | 0,5 |
| Tinuvin® 1130 | 1,5 | 1,5 | 1,5 | 1,5 |
| Si Öl LO 50% 10%ig | 1 | 1 | 1 | 1 |
| Solvesso® 100 | 1,5 | 1,5 | 1,5 | 1,5 |
| Xylol | 2,5 | 2,5 | 2,5 | 2,5 |
| BuAc | 11 | 11 | 11 | 11 |
| Desmodur® N 3390 | 39,0 | 34,3 | 32,7 | 35,9 |
| Auslaufbecher | 21 | 21 | 21 | 21 |
| (DIN 53 211) | | | | |
| (Sekunden) | | | | |
| Lackbezeichnung | Lack 4 | Lack 5 | Lack 6 | Lack 7 |
| Tinuvin® 292 "HALS" (Fa. Ciba Geigy, Basel) Tinuvin® 1130 UV-Absorber (Fa. Ciba Geigy, Basel) Si Öl LO 50% Verlaufsmittel Silikonöl (Fa. Wacker Chemie GmbH, Burghausen) Desmodur® N 3390 Isocyanurat-Gruppen aufweisendes Polyisocyanat (Fa. Bayer AG, Leverkusen) BuAc Butylacetat | | | | |

**Tabelle 6:**

| Herstellung der "high solid" Klarlacke | | |
|---|---|---|
| | Copolymerisate | |
| Ansatz | 8 | 9 |
| Aussehen | transparent | transparent |
| FK % | 75,3 | 75,5 |
| OH-Zahl/% OH | 147/4,4 | 145/4,4 |
| Visk. mPa s(50%) | 31 | 34 |
| Bindemittel | 82 | 82 |
| Tinuvin® 292 | 0,5 | 0,5 |
| Tinuvin® 1130 | 1,5 | 1,5 |
| Si Öl LO 50% 10%ig | 1 | 1 |
| Solvesso® 100 | 1,5 | 1,5 |
| Xylol | 2,5 | 2,5 |
| BuAc | 11 | 11 |
| Desmodur® N 3390 | 34,3 | 34,3 |
| Auslaufbecher (DIN 53 211) | 21 | 21 |
| (Sekunden) | | |
| Lackbezeichnung | Lack 8 | Lack 9 |
| Tinuvin® 292 "HALS" (Fa. Ciba Geigy, Basel) | | |
| Tinuvin® 1130 UV-Absorber (Fa. Ciba Geigy, Basel) | | |
| Si Öl LO 50% Verlaufsmittel Silikonöl (Fa. Wacker Chemie GmbH, Burghausen) | | |
| Desmodur® N 3390 Isocyanurat-Gruppen aufweisendes Polyisocyanat (Fa. Bayer AG, Leverkusen) | | |
| BuAc Butylacetat | | |

### II. 2. Pigmentierte Lacke

**Tabelle 7:**

| Herstellung von Weißlacken | | |
|---|---|---|
| Bindemittel | Copolymerisat 1 | Vergleich: Standard Macrynal® SM515 |
| FK % | 75,1 | 70 |
| OH-Zahl/% OH | 140/4,2 | 150/4,5 |
| Bindemittel | 53 | 55 |
| TiO₂ - 2310 | 29,2 | 29,2 |
| Bentone® 34 | 2,5 | 2,5 |
| (10% Paste in Xylol) | | |
| Additol® XL 260 | 1 | 1 |
| Si Öl LO 50%/10% | 1 | 1 |
| Solvesso® 100 | 1,5 | 1,5 |
| BuAc | 6,2 | 5,2 |
| Xylol | 2,5 | 2,5 |
| Methoxypropylacetat | 3,1 | 2,1 |
| Desmodur® N 3390 | 21 | 21,9 |
| Bindemittel: | | |
| Pigment | 1:0,5 | 1:0,5 |
| Auslaufbecher | | |
| (DIN 53211) | 21 | 21 |
| (Sekunden) | | |
| Lackbezeichnung | Lack 10 | Lack 11 |
| TiO₂ - 2310 Weißpigment (Fa. Kronos Titan GmbH, Leverkusen) Bentone® 34 Antiabsetzmittel (Fa. Kronos Titan GmbH, Leverkusen) Additol® XL 260 (Fa. Vianova GmbH, Graz) | | |
| Si Öl LO 50% Verlaufsmittel Silikonöl (Fa. Wacker Chemie GmbH, Burghausen) Desmodur® N 3390 Isocyanurat-Gruppen aufweisendes Polyisocyanat (Fa. Bayer AG, Leverkusen) | | |
| BuAc Butylacetat | | |
| Standardsystem: "high solid" Bindemittel Macrynal® SM 515 der Fa. Hoechst AG, Frankfurt/Main | | |

### 11.3. Herstellung von Autoreparaturfüller

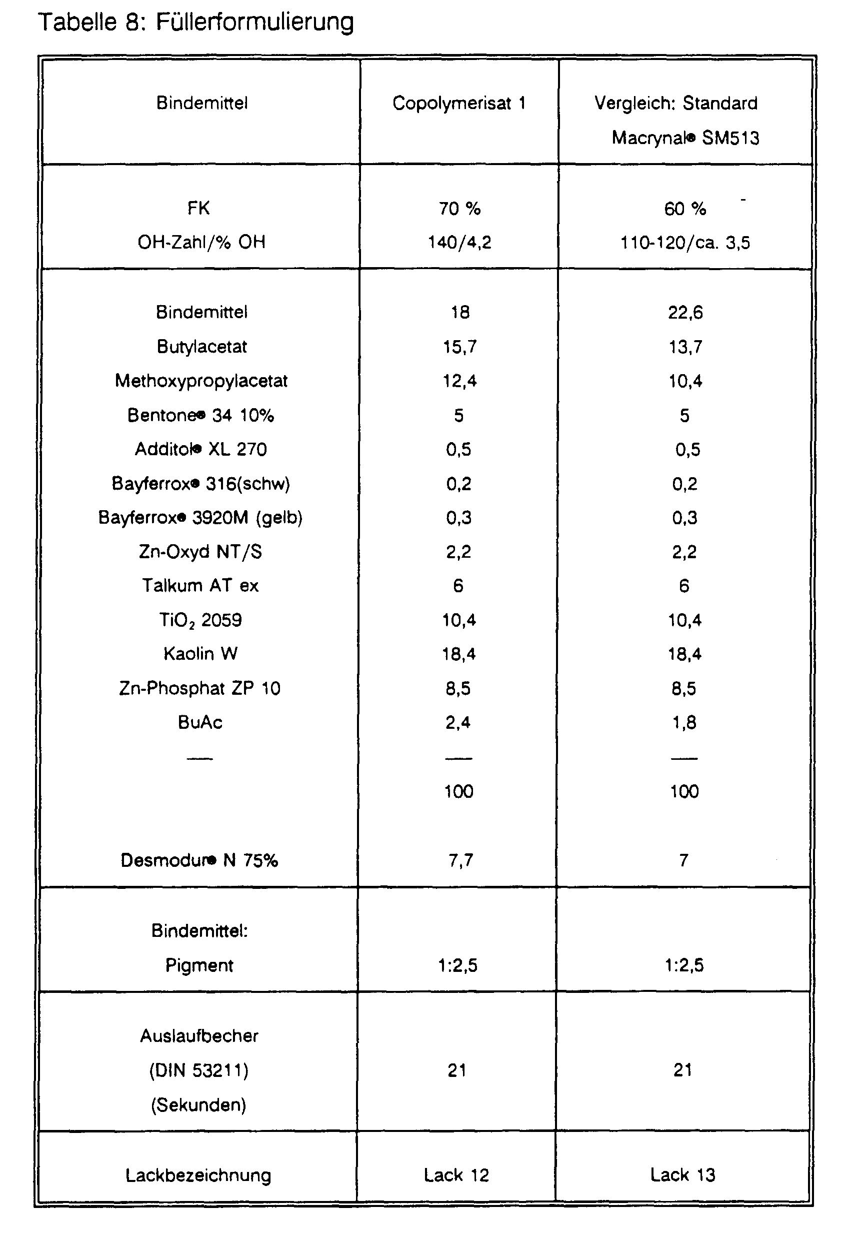

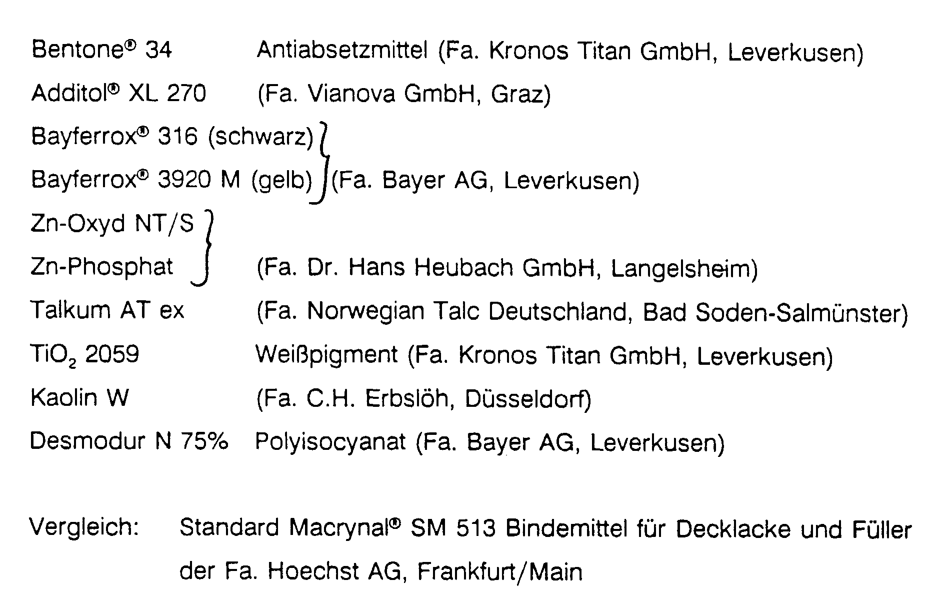

### III.) Lacktechnische Prüfung

### III. 1. und 2. Lacktechnische Prüfung von "high solid" Klar- und pigmentierten Lacken

Die wie in II. 1. und 2. gefertigten Lacksysteme wurden mittels 100 µm Rakel auf gereinigte Glasplatten appliziert und unter den Bedingungen der Lufttrocknung und forcierter Trocknung (45 Minuten bei 60 °C) geprüft.

**Tabelle 9:**

| Lacktechnische Prüfung der "high solid" Klarlacke | | | |
|---|---|---|---|
| Lackbezeichnung | Lack 1 | Lack 2 | Lack 3 |
| Aussehen | transparent | transparent | transparent |
| Ausgng./Topfzeit | > 8h | > 8h | > 8h |
| Staubtrocknung | 15' | 22' | 12' |
| Klebfreitrocknung | 4h | 4,5h | 4 |
| FK-1h 125°C (%) | 62,5 | 65,0 | 61,8 |
| Pendelhärte nach | | | |
| 24 h | 25 | 59 | 34 |
| 2 d | 101 | 105 | 118 |
| 4 d | 182 | 186 | 187 |
| 10 d | 217 | 198 | 211 |
| Superbenzin nach 10 d in Min. | > 30' | 20' | > 30' |
| Pendelhärte nach 45'60°C-Trocknung | | | |
| 24h | 59 | 136 | 77 |
| 2d | 133 | 177 | 150 |
| 4d | 196 | 207 | 193 |
| 7d | 215 | 210 | 217 |
| 45'60°C-Trocknung Superbenzin nach 7 d in Min. | > 30' | > 30' | > 30' |
| Pendelhärten nach König | | | |
| FK Festkörperbestimmung nach DIN 53 216 d Tage | | | |

**Tabelle 10:**

| Lacktechnische Prüfung der "high solid" Klarlacke | | | | |
|---|---|---|---|---|
| Lackbezeichnung | Lack 4 | Lack 5 | Lack 6 | Lack 7 |
| Aussehen | transparent | transparent | transparent | transparent |
| Ausgng./Topfzeit | > 8 h | > 8h | > 8h | > 8h |
| Staubtrocknung | 10' | 19' | 12' | 23' |
| Klebfreitrocknung | 3,5 h | 4,5 h | 4,5 h | 5 h |
| FK-1h 125°C (%) | 61,0 | 63,1 | 61,9 | 65,5 |
| Pendelhärte nach | | | | |
| 24 h | 62 | 48 | 38 | 32 |
| 2 d | 148 | 107 | 116 | 102 |
| 4 d | 176 | 168 | 166 | 148 |
| 10 d | 221 | 203 | 211 | 192 |
| Superbenzin nach 10 d in Min. | > 30 ' | > 30' | > 30' | > 30' |
| Pendelhärte nach 45'60°C-Trocknung | | | | |
| 24h | 92 | 66 | 83 | 56 |
| 2d | 172 | 123 | 152 | 112 |
| 4d | 205 | 209 | 198 | 159 |
| 7d | 223 | 218 | 220 | 202 |
| 45'60°C-Trocknung Superbenzin nach 7 d in Min. | > 30' | > 30' | > 30' | > 30' |
| Pendelhärten nach König | | | | |
| FK Festkörperbestimmung nach DIN 53 216 | | | | |
| d Tage | | | | |

**Tabelle 11:**

| Lacktechnische Prüfung der "high solid" Klarlacke | | |
|---|---|---|
| Lackbezeichnung | Lack 8 | Lack 9 |
| Aussehen | transparent | transparent |
| Ausgng./Topfzeit | > 8h | > 8h |
| Staubtrocknung | 18' | 21' |
| Klebfreitrocknung | 4,5h | 4,5h |
| FK-1h 125°C (%) | 64,0 | 65,3 |
| Pendelhärte nach | | |
| 24 h | 37 | 42 |
| 2 d | 111 | 113 |
| 4 d | 152 | 156 |
| 10 d | 213 | 205 |
| Superbenzin nach 10 d in in Min. | > 30' | > 30' |
| Pendelhärte nach 45'60°C-Trocknung | | |
| 24h | 51 | 49 |
| 2d | 137 | 128 |
| 4d | 181 | 167 |
| 7d | 220 | 213 |
| 45'60°C-Trocknung | | |
| Superbenzin nach 7 d in Min. | > 30' | > 30' |
| Pendelhärten nach König | | |
| FK Festkörperbestimmung nach DIN 53 216 | | |
| d Tage | | |

- **Fazit**:: Die erfindungsgemäßen Beschichtungsmittel weisen in praxisgerechten formulierten Klarlacken unkatalysiert sehr hohe Lackfestkörpergehalte, hohe Filmhärten und Beständigkeiten mit hoher Trocknungsgeschwindigkeit und rascher Durchtrocknung auf.
Der Decklackstand und die Lackverarbeitung sind den Eigenschaften der Standardsysteme ebenbürtig.
Standardsysteme: "high solid" Bindemittel Macrynal® SM 515, Macrynal® SM 516 der Fa. Hoechst AG, Frankfurt/Main

**Tabelle 12:**

| Lacktechnische Prüfung der Weißlacke (pigmentierte Lacke) | | |
|---|---|---|
| Lackbezeichnung | Lack 10 | Lack 11 (Vergleich) |
| Ausgng./Topfzeit | 21"/ > 24h | 21"/ > 24 h gel. |
| Staubtrocknung | 15' | 10' |
| Klebfreitrocknung | 3,5h | 2,5h |
| FK-1h 125°C in % | 65,3 | 59,2 |
| Pendelhärte nach | | |
| 24 h | 71 | 68 |
| 2 d | 121 | 99 |
| 4 d | 141 | 135 |
| 5 d | 167 | 164 |
| 7 d | 192 | 188 |
| 10 d | 212 | 207 |
| Superbenzin nach 10 d in in Min. | > 30 | > 30 |
| Pendelhärte nach 45'60°C-Trocknung | | |
| 24h | 113 | 121 |
| 2d | 171 | 170 |
| 3d | 192 | 186 |
| 5d | 201 | 198 |
| Superbenzin nach 5 d in Min. | > 30 | > 30 |
| Pendelhärten nach König | | |
| FK Festkörperbestimmung nach DIN 53 216 | | |
| " Sekunden, ' Minuten, h: Stunden, d Tage | | |

- **Fazit:**: Die erfindungsgemäßen Bindemittel zeigen in praxisgerechten Weißlack-Formulierungen eine vorteilhaft verlängerte Topfzeit bei deutlich angehobenem Lackfestkörpergehalt.
Die Trocknung ist gegenüber dem Standardharz-System nur geringfügig verzögert, dagegen in der Filmhärteentwicklung sowohl bei Raumtemperaturtrocknung als auch forcierter Trocknung als gleichwertig oder besser zu betrachten. Die chemische Resistenz ist auf gleich hohem Niveau.

### III. 3. Lacktechnische Prüfung der Füller

Die wie in 11. 3. Tabelle 8 formulierten Füller werden mittels 200 µm Rakel auf gereinigte Glasplatten appliziert und unter der Bedingung der Lufttrocknung geprüft.

**Tabelle 13:**

| Lacktechnische Prüfung der Füller | | |
|---|---|---|
| Lackbezeichnung | Lack 12 | Lack 13 (Vergleich) |
| Topfzeit | 4h | 3h |
| FK-1h 125°C (%) | 64 | 58 |
| Trockenschleifbarkeit nach 16 h | sehr gut | sehr gut |
| Lösemittelfestigkeit Butylacetat 1 min. nach 16 h | in Ordnung | in Ordnung |
| h Stunde | | |
| FK Festkörperbestimmung nach DIN 53 216 | | |

- **Fazit:**: Mit einem der erfindungsgemäßen Bindemittel läßt sich ein Autoreparaturfüller mit hohem Festkörpergehalt und langer Verarbeitungszeit formulieren.

## Patentansprüche

1. Copolymerisate mit besonders niedriger Lösungsviskosität, herstellbar durch eine Polymerisation in Substanz, bei der eine Komponente (A) zu Beginn der Polymerisation vorgelegt wird und im weiteren Verlauf mindestens zwei olefinisch ungesättigte copolymerisierbare Monomere (B) zugefügt werden, wobei die Komponente (A) in einem Anteil von 5 bis 50 Gew.-% und die Komponente (B) in einem Anteil von 95 bis 50 Gew.-% eingesetzt wird, die Komponente (A) ein oder mehrere Glycidylester von aliphatischen gesättigten Monocarbonsäuren mit einem tertiären oder quaternären α-C-Atom ist, und die olefinisch ungesättigten Monomeren gemäß (B) enthalten
B1) ein oder mehrere olefinisch ungesättigte Monomere mit mindestens einer -COOH-Gruppe,
B2) einen oder mehrere Ester der Acryl- oder Methacrylsäure mit cyclischen aliphatischen Alkoholen mit 5 bis 30 Kohlenstoffatomen,
sowie gegebenenfalls eine oder mehrere der Komponenten B3 bis B5, nämlich
B3) einen oder mehrere Hydroxyalkylester von α,β-ungesättigten Carbonsäuren,
B4) einen oder mehrere Ester einer α,β-ungesättigten Carbonsäure mit einem einwertigen aliphatischen Alkohol mit 1 bis 20 C-Atomen und
B5) eine oder mehrere olefinisch ungesättigte Verbindungen, die nicht unter B1, B2, B3 oder B4 fallen,
dadurch gekennzeichnet, daß die Copolymerisate eine zahlenmittlere molare Masse Mₙ unter 5000 g/mol und eine Glasübergangstemperatur oberhalb Raumtemperatur (20°C) bei einer Aufheizrate von 10 K/Min, besitzen.

2. Copolymerisate nach Anspruch 1, dadurch gekennzeichnet, daß sie eine OH-Zahl von 40 bis 250 mg KOH/g, eine zahlenmittlere molare Masse Mₙ von weniger als 4000 g/mol und eine Lösungsviskosität von 10 bis 2000 mPa·s (gemessen in 50 %iger Lösung bei 23 °C) besitzen.

3. Copolymerisate nach Anspruch 1, dadurch gekennzeichnet, daß der Alkohol der Komponente B2) ausgewählt ist aus Cyclohexanol, 4-tert.-Butylcyclohexanol, 3,3,5-Trimethylcyclohexanol, Isoborneol, (8/9)-Hydroxy-tricyclo[5.2.1.0^{2.6}]dec-3-en (Dihydrodicyclopentadienylalkohol), 8-Hydroxy-tricyclo[5.2.1.0^{2.6}]decan, 8-Hydroxymethyltricyclo[5.2.1.0^{2.1}]decan und Citronellol.

4. Copolymerisate nach Anspruch 1, dadurch gekennzeichnet, daß die Komponente (A) ausgewählt ist aus den Glycidylestern der 2,2-Dimethylolpropionsäure, der Neononan-, der Neodecan- und der Neoundecansäure.

5. Verfahren zur Herstellung von Copolymerisaten gemäß Anspruch 1, dadurch gekennzeichnet, daß in der Reaktion die Komponente (A) vorgelegt wird, danach die Komponenten (B) und ein oder mehrere radikalische Initiatoren zusammen oder jeweils für sich in Substanz zugefügt einer gemeinsamen Polymerisation unterworfen wird.

6. Verwendung der Copolymerisate nach Anspruch 1 zur Herstellung von Überzügen.

7. Verwendung der Copolymerisate nach Anspruch 1 zur Herstellung von Zwischenschichten als auch von pigmentierten oder unpigmentierten Decklacken.

8. Verwendung der Copolymerisate nach Anspruch 1 als Bindemittel für Lacke, insbesondere für "high-solid"-Lacke.

9. Lacke, die mindestens ein Copolymerisat gemäß Anspruch 1 als Bindemittelkomponenten enthalten und durch Vernetzung mit Polyisocyanaten bei moderaten Temperaturen bzw. bei Raumtemperatur härten.

10. Verwendung der Copolymerisate nach Anspruch 1 zur Herstellung von Pulverlacken.

## Claims

1. A copolymer of particularly low solution viscosity, which can be prepared by a polymerization in bulk, in which one component (A) is initially charged at the start of the polymerization and, in the further course of the polymerization, at least two olefinically unsaturated copolymerizable monomers (B) are added, component (A) being employed in a proportion of from 5 to 50 % by weight and component (B) being employed in a proportion of from 95 to 50 % by weight, component (A) being one or more glycidyl esters of aliphatic, saturated monocarboxylic acids containing a tertiary or quaternary a carbon atom, and the olefinically unsaturated monomers in accordance with (B) containing
B1) one or more olefinically unsaturated monomers having at least one -COOH group,
B2) one or more esters of acrylic or methacrylic acid with cyclic aliphatic alcohols of 5 to 30 carbon atoms,
and if desired one or more of components B3 to B5, namely
B3) one or more hydroxyalkyl esters of α,β-unsaturated carboxylic acids,
B4) one or more esters of an α,β-unsaturated carboxylic acid with a monohydric aliphatic alcohol of 1 to 20 carbon atoms, and
B5) one or more olefinically unsaturated compounds which are not included in B1, B2, B3 or B4,
wherein the copolymer possesses a number-average molar mass Mₙ of below 5000 g/mol and a glass transistion temperature which is above room temperature (20°C) at a heat-up rate of 10 K/min.

2. A copolymer as claimed in claim 1, which possesses an OH number of from 40 to 250 mg of KOH/g, a number-average molar mass Mₙ of less than 4000 g/mol and a solution viscosity of from 10 to 2000 mPa·s (measured in 50 % strength solution at 23°C).

3. A copolymer as claimed in claim 1, wherein the alcohol of component B2) is selected from cyclohexanol, 4-tert-butylcyclohexanol, 3,3,5-trimethylcyclohexanol, isoborneol, (8/9)-hydroxytricyclo[5.2.1.0^{2,6}]dec-3-ene-(dihydrodicyclopentadienyl alcohol), 8-hydroxytricyclo[5.2.1.0^{2,6}]decane, 8-hydroxymethyltricyclo-[5.2.1.0^{2,1}]decane and citronellol.

4. A copolymer as claimed in claim 1, wherein component (A) is selected from the glycidyl esters of 2,2-dimethylolpropionic acid, neononanoic, neodecanoic and neoundecanoic acid.

5. A process for the preparation of a copolymer as claimed in claim 1, which comprises, in the reaction, initially charging component (A), then adding components (B) and one or more free-radical initiators, together or each individually in bulk, and subjecting the batch to conjoint polymerization.

6. The use of a copolymer as claimed in claim 1 for the production of coatings.

7. The use of a copolymer as claimed in claim 1 for the production of intermediate coats or of pigmented or unpigmented topcoats.

8. The use of a copolymer as claimed in claim 1 as a binder for coating materials, especially for high-solids coating materials.

9. A coating material which comprises at least one copolymer as claimed in claim 1 as binder component(s), and which cures by crosslinking with polyisocyanates at moderate temperatures or at room temperature.

10. The use of a copolymer as claimed in claim 1 for the production of powder coatings.

## Revendications

1. Copolymères ayant une viscosité particulièrement faible en solution, pouvant être préparés par une polymérisation sans solvant, dans laquelle un composant (A) est placé dans le réacteur au début de la polymérisation, puis, au cours des opérations ultérieures, on ajoute au moins deux monomères copolymérisables (B) à insaturation oléfinique, le composant (A) étant utilisé selon une proportion de 5 à 50 % en poids et le composant (B) selon une proportion de 95 à 50 % en poids, le composant (A) étant constitué d'un ou plusieurs esters glycidyliques d'acides monocarboxyliques aliphatiques saturés comportant un atome de carbone α tertiaire ou quaternaire, et les monomères à insaturation oléfinique selon (B) contiennent :
B1) un ou plusieurs monomères à insaturation oléfinique comportant au moins un groupe -COOH,
B2) un ou plusieurs esters de l'acide acrylique ou de l'acide méthacrylique et d'alcools aliphatiques cycliques ayant de 5 à 30 atomes de carbone,
et éventuellement un ou plusieurs des composants B3 à B5, à savoir :
B3) un ou plusieurs esters hydroxyalkyliques d'acides carboxyliques α,β-insaturés,
B4) un ou plusieurs esters d'un acide carboxylique α,β-insaturé et d'un monoalcool aliphatique ayant de 1 à 20 atomes de carbone, et
B5) un ou plusieurs composés à insaturation oléfinique
n'entrant pas dans les catégories B1, B2, B3 ou B4, caractérisés en ce que les copolymères ont une masse molaire moyenne en nombre Mₙ inférieure à 5000 g/mole et une température de transition vitreuse supérieure à la température ambiante (20°C) pour une vitesse de montée en température de 10 K/min.

2. Copolymères selon la revendication 1, caractérisés en ce qu'ils ont un indice d'hydroxyle de 40 à 250 mg KOH/g, une masse molaire moyenne en nombre Mn < 4000 g/mol et une viscosité en solution de 10 à 2000 mPa.s, mesurée en solution à 50 % à 23°C.

3. Copolymères selon la revendication 1, caractérisés en ce que l'alcool du composant B2) est choisi parmi le cyclohexanol, le 4-tert-butylcyclohexanol, le 3,3,5,5-triméthylcyclohexanol, l'isobornéol, le (8/9)hydroxytricyclo[5.2.1.0^{2.6}]déc-3-ène, (l'alcool dihydrodicyclopentadiénylique), le 8-hydroxy-tricyclo[5.2.1.0^{2,6}]décane, le 8-hydroxyméthyltricyclo[5.2.1.0^{2,6}]décane et le citronellol.

4. Copolymères selon la revendication 1, caractérisés en ce que le composant A est choisi parmi les esters glycidyliques de l'acide 2,2-diméthylolpropionique, de l'acide néononanoïque, de l'acide néodécanoïque et de l'acide néoundécanoïque.

5. Procédé de préparation de copolymères selon la revendication 1, caractérisé en ce qu'on met en place pour la réaction le composant (A), puis les composants B et un ou plusieurs amorceurs radicalaires, ajoutés ensemble ou chacun séparément sans solvant, sont soumis à une polymérisation commune.

6. Utilisation des copolymères selon la revendication 1 pour préparer des revêtements.

7. Utilisation des copolymères selon la revendication 1 pour préparer tant des couches intermédiaires que des couches de finition pigmentées ou non pigmentées.

8. Utilisation des copolymères selon la revendication 1 en tant que liants pour vernis, en particulier pour vernis à haute teneur en extrait sec.

9. Vernis contenant au moins un copolymère selon la revendication 1 en tant que composants liants, et qui durcissent par réticulation avec des polyisocyanates à des températures modérées ou à la température ambiante.

10. Utilisation des copolymères selon la revendication 1 pour préparer des peintures en poudre.
